(19) Europäisches Patentamt
European Patent Office
Office européen des brevets

(11) **EP 1 420 271 A2**

(12) **EUROPEAN PATENT APPLICATION**

(43) Date of publication:
**19.05.2004 Bulletin 2004/21**

(51) Int Cl.7: **G01V 8/10**

(21) Application number: **03026052.5**

(22) Date of filing: **12.11.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **13.11.2002 JP 2002329473**
      **30.07.2003 JP 2003282554**

(71) Applicant: **Keyence Corporation**
**Osaka-shi, Osaka 533-8555 (JP)**

(72) Inventor: **Sakaguchi, Tomikazu**
**Keyence Corporation**
**Osaka-shi Osaka 533-8555 (JP)**

(74) Representative: **Zimmermann & Partner**
**Postfach 33 09 20**
**80069 München (DE)**

(54) **Transmission type photoelectric sensor, element holder assembled therein and manufacturing method thereof**

(57)   An element holder is a single-piece member integrally having a light-blocking component for limiting the spread angle of light. The element holder includes a cylindrical internal path and can detachably hold an optical element (5) on one end. A lens (6) is affixed on the opposite end of the element holder. The element holder is a molded plastic product, and includes a single light-blocking wall (7) integrally molded with the element holder to extend across the internal path in a level approximately equally spaced from the optical element and the lens to limit the spread angle of light.

# FIG.7

EP 1 420 271 A2

## Description

The present invention generally relates to optical measurement systems. In particular it relates to photoelectric sensors. More specifically, it relates to a transmission type photoelectric sensor, an element holder used to assemble the photoelectric sensor, and a manufacturing method of the element holder.

Heretofore known are transmission type photoelectric sensors that have light emitting elements and light detecting elements in opposed alignment to emit and receive light. Thus, if any of the light detecting elements do not detect expected light from counterpart light emitting elements, the photoelectric sensor regards it as a sign of intrusion of something into the prohibited zone, and outputs an alarm.

Japanese Patent Publication No. 10-255614 points out a malfunction caused by aberrant light as one of problems of transmission type photoelectric sensors. To prevent this malfunction, the publication proposes an element holder having a light-blocking member that is prepared as a separate member and affixed to the element holder to limit the spread angle of light.

However, the separate-piece light-blocking member invites assembling errors relative to the element holder. Moreover, the separate-piece element as an additional component needs an additional assembling step and increases the manufacturing cost.

The present invention intends to overcome at least some of the above problems. The object is solved by the transmission type photoelectric sensor according to independent claims 1 and 8, by the plastic element holder unit according to independent claim 11, and the method of manufacturing a plastic element holder according to independent claim 16.

Further advantages, features, aspects and details of the invention are evident from the dependent claims, the description and the drawings.

It is therefore an object of the invention to provide an element holder unit that can be molded as a single-piece product including a light-blocking wall for limiting the spread of light.

A further object of the invention is to provide a transmission type photoelectric sensor using the single-piece element holder units.

The present invention accomplishes those objects by providing a transmission type photoelectric sensor comprising:

an optical element;
a plastic element holder having a base wall which has an aperture and detachably contacts the optical element; and
a lens positioned on an end of the element holder opposite from the base wall,

wherein the element holder includes:

a light path extending from the aperture of the base wall to the lens; and
an intermediate light-blocking wall extending in a substantially equally spaced level from the base wall and the lens to limit the spread angle of light, and

wherein the element holder having the intermediate light-blocking wall is a single-piece molded product.

According to the basic features of the invention summarized above, the intermediate light-blocking wall integral with the plastic element holder reduces the spread angle of light. Therefore, unlike the conventional photoelectric sensor in which a separate-piece light-blocking member is attached to the element holder, the photoelectric sensor according to the invention is free from assembling errors, and can reduce the assembling steps.

The element holder preferably has an opening in a span of its sidewall from the base wall to the intermediate light-blocking wall. The corresponding lengthwise half of the light path is exposed externally through the opening. The opening results from the use of a die movable in the direction perpendicular to the optical axis of the light path in the molding process. Therefore, the opening typically has a height substantially equal to half of the length of the light path and a width substantially equal to the diameter of the light path. By using the die that can be removed from the molded product in the direction across the optical axis of the light path, it is possible to complete the element holder including the intermediate light-blocking wall, its through hole and small aperture in the base wall altogether in one molding process.

The small aperture in the base wall is preferably shaped to increase its diameter toward the element-fitting end to facilitate removal of one of the dies used for molding the element holder. The through hole in the intermediate light-blocking wall is preferably shaped to increase its diameter toward the lens-fitting end for the same purpose.

A plurality of element holders may be formed integrally to form a single element holder unit including element holder portions equivalent to discrete element holders. The above-summarized features of the element holder are applicable to each element holder portion in the element holder unit as well, as far as those features are related to the nature of the element holder portions.

The invention is also directed to apparatuses for carrying out the disclosed methods and including apparatus parts for performing each described method steps. These method steps may be performed by way of hardware components, a computer programmed by appropriate software, by any combination of the two or in any other manner. Furthermore, the invention is also directed to methods by which the described apparatus operates. It includes method steps for carrying out every function of the apparatus or manufacturing every part of the apparatus.

The invention will be better understood by reference to the following description of embodiments of the invention taken in conjunction with the accompanying drawings, wherein:

Fig. 1 is a schematic diagram for explaining an element holder according to an embodiment of the present invention;

Fig. 2 is a diagram for explaining the theory for finding the position of a single intermediate light-blocking wall in the element holder according to an embodiment of the present invention;

Fig. 3 is a diagram showing a first triangle defined by perimeter beams of light that travel through the light path in the element holder as illustrated in Fig. 2 to explain how to derive Equation 1 for finding the best position of the intermediate light-blocking wall;

Fig. 4 is a diagram showing a second triangle defined by perimeter beams of light that travel through the light path in the element holder as illustrated in Fig. 2 to explain how to derive Equation 2 for finding the best position of the intermediate light-blocking wall;

Fig. 5 is a perspective view of the entire outer appearance of a multi-beam photoelectric sensor including element holders according to an embodiment of the present invention;

Fig. 6 is a cross-sectional view of the main body of the multi-beam photoelectric sensor shown in Fig. 5, which is made by extrusion molding, taken along the line VI-VI of Fig. 5;

Fig. 7 is a cross-sectional view of an emitter holder unit having a plurality of element holders spaced in equal intervals according to the embodiment shown in Fig. 1;

Fig. 8 is a cross-sectional view of a detector holder unit having a plurality of element holders spaced in equal intervals according to the embodiment shown in Fig. 1:

Fig. 9 is a side elevational view of the emitter or detector holder unit;

Fig. 10 is a diagram for explaining that the light path can be made in element holder portions of the holder unit shown in Fig. 9 in a single process using three dies in combination;

Fig. 11 is a perspective view showing a part of the emitter holder unit by removing the other part thereof to show its interior structure;

Fig. 12 is an enlarged view of a part of the emitter holder unit shown by the dashed line circle in Fig. 11;

Fig. 13 is a cross-sectional view of the emitter holder unit, taken along the line XIII-XIII of Fig. 12;

Fig. 14 is a cross-sectional view of the emitter holder unit, taken along the line XIV-XIV of Fig. 12; and

Fig. 15 is a cross-sectional view of the emitter holder unit of Fig. 11, taken along a plane closer to the lenses to expose the intermediate walls.

The preferred embodiments are explained herein below in greater detail with reference to the drawings.

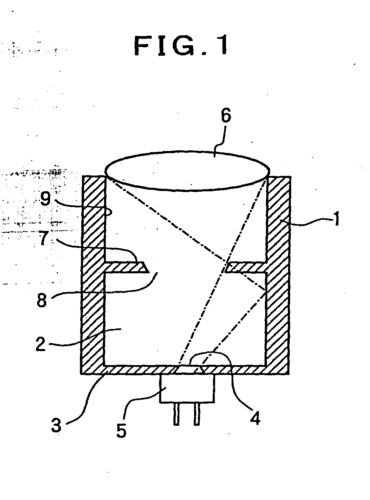

As shown in Fig. 1, the element holder 1 defines a light path 2 inside. One end of the element holder 1 is substantially closed by a base wall 3. The base wall 3 has a circular small aperture 4 in its center. The small aperture 4 is preferably circular. An optical element 5, which may be either a light-emitting element or a light-detecting element, is detachably held under the base wall 3 in alignment with the small aperture 4. This lengthwise end of the element holder 1 is herein called the element-side end or rear end to simplify the explanation.

The other end of the element holder 1 receives an emitter lens or detector lens 6. This lengthwise end of the element holder is herein called the lens-side end or front end to simplify the explanation. In case the element is a light emitting element, the light emanating from the emitter element 5 travels through the light path 2 inside the element holder 1 and next through the lens 6. As a result, the light becomes a beam of light that is a flux of collimated rays. In case the element is a light detecting element, the light is converged by the lens 6 and enters into the light detecting element 5 through the small aperture 4.

The element holder 1 is a single-piece, molded, plastic product made by injection molding. The element holder 1 includes a single intermediate light-blocking wall 7 molded integrally with the element holder 1 to extend across the light path 2 at an approximately equally spaced position from the base wall 3 and the lens-side end. The intermediate light-blocking wall 7 has a relatively large through hole 8. The through hole 8 is preferably circular to the extent acceptable for its manufacturing method, which will be explained later.

A sidewall 9 extends in the lengthwise direction of the element holder 1 to define the light path 2. The inner surface of the sidewall 9 is preferably coated by a coating material capable of reducing reflection of light by the sidewall 9. A black coating material is a typical coating material suitable for this purpose. Alternatively, a pigment may be added to the plastic material used for injection molding of the element holder 1 to darken the entirety of the element holder 1 to black or another dark color.

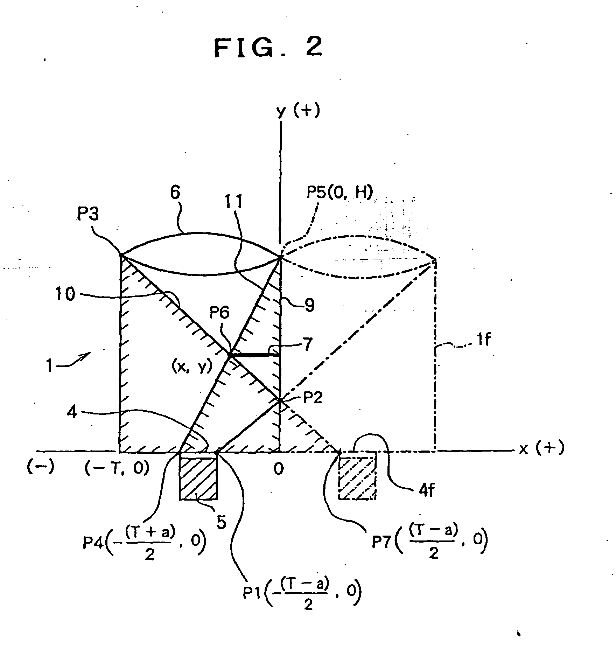

The intermediate light-blocking wall 7 is approximately equally spaced from the base wall 3 and the lens-side end as explained above. Figs. 2 through 4 are used to explain how to theoretically determine the best position of the intermediate light-blocking wall 7 and describe the effects obtained by the single intermediate light-blocking wall 7. The theory is based on the following conditions.

The first condition is that the light path 2 of the element holder is cylindrical.

The second condition is that a part of the light repetitively reflecting on the sidewall 9 is attenuated in luminous energy, and does not adversely affect the amount of light even if allowed to exit from the light path 2.

The third condition is that part of the light diverging and reflecting on the sidewall 9 of the light path 2 is attenuated in luminous energy, and does not adversely affect the amount of light even if allowed to exit from the light path 2.

The fourth condition is that the intermediate light-blocking wall 7 is a single wall.

In view of the above-mentioned conditions, in case the optical element is a light-emitting element, the function assigned to its intermediate light-blocking wall 7 is to prohibit that part of the light regularly reflecting only once on the sidewall 9 from reaching the emitter lens 6.

With reference to Fig. 2, it is assumed that a beam 10 of light that emanates from the emitter element 5 (via a perimeter P1 of the small aperture 4) and reaches the most remote perimeter P3 of the lens 6 after regularly reflecting only once on a point P2 of the nearest sidewall 9 of the associated element holder 1. It is also assumed that a beam 11 of light that emanates from the light-emitting element 5 (via the opposite perimeter P4 of the small aperture 4) and directly reaches the most remote perimeter P5 of the lens 6. Thus, the crossing point P6 of the beam 10 and the beam 11 is the perimeter of the zone where light should be prohibited from passing through. Therefore, if the annular zone having the crossing point P6 as the circumferentially inner perimeter and having the adjacent surface of the sidewall 9 as the circumferentially outer perimeter is interrupted by the intermediate light-blocking wall 7, the above-mentioned conditions are satisfied.

In Fig. 2, a virtual element holder 1f is connected side-by-side to share one of the perimeter lines of the sidewall 9. The reflected beam of light 10 can be replaced by the beam of light emanating via a perimeter P7 of the virtual small aperture 4f of the virtual element holder 1f.

An X-Y coordinate system is defined in Fig. 2. The X-axis is the inner surface of the base wall 3 and its extension. The Y-axis is the border line between the real element holder 1 and the virtual element holder 1f. Thus, coordinates of the respective points can be defined as follows.

  P1: (-(T-a)/2, 0)
  P3: (-T, H)
  P4: (-(T+a)/2, 0)
  P5: (0, H)
  P7: ((T-a)/2, 0)

where "T" is the diameter of the aperture adjacent to the lens 6, "H" is the length of the light path 2 in the element holder 1, "a" is the diameter of the light that enters into the element holder 1 from the light emitting element 5, which equals the diameter of the small aperture 4 in the base wall 3.

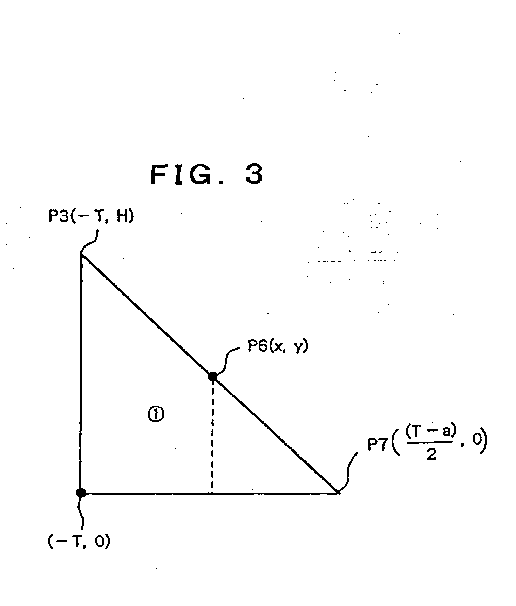

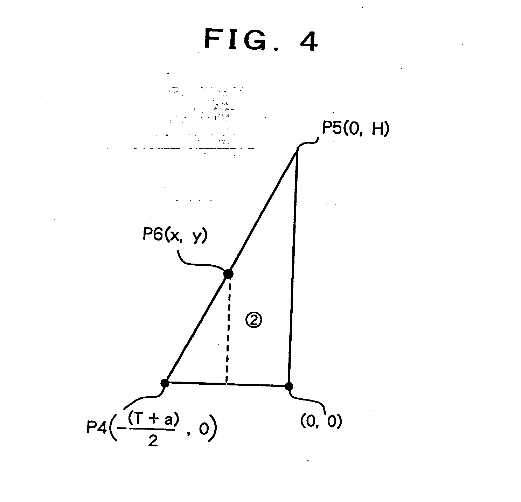

Figs. 3 and 4 show two triangles made by those and other points. Using these triangles and coordinates of the respective points, an equation for finding coordinates (x, y) of the point 6 can be obtained as follows.

From the first triangle shown in Fig. 3, the equation, H:T+(T-a)/2 = y:-x+(T-a)/2, is derived. This equation can be rewritten as follows.

$$y=\{-2Hx/(3T-a)\}+\{H(T-a)/(3T-a)\} \qquad (1)$$

From the second triangle shown in Fig. 4, the equation, H:(T+a)/2=y:{(T+a)/2}+x, is derived. This equation can be rewritten as follows.

$$y=\{2Hx/(T+a)\}+H \qquad (2)$$

From Equations (1) and (2), the following solutions for x and y are obtained.

$$x = -(T+a)/4$$

$$y = H/2$$

Also for beams of light received by the light detecting element, substantially the same theory is applicable. Therefore, when the intermediate light-blocking wall 7 extends in the level dividing the light path 2 in equal halves along the lengthwise direction, the single intermediate light-blocking wall 7 in the element holder 1 is effective to prevent malfunctions by aberrant light to a practically acceptable level.

For derivation of the equations, the light path 2 of the element holder 1 is assumed to be cylindrical. However, the theory is applicable also when the light path 2 of the element holder 1 is not cylindrical. If the light path 2 is reduced in diameter toward the lens-side end, the intermediate light-blocking wall 7 may be formed nearer to the lens-side end than half of the level in the lengthwise direction of the light path 2. If the light path 2 is increased in diameter toward the lens-side end for mounting the lens 6, the intermediate light-blocking wall 7 may be formed nearer to the base wall 3 (nearer to the element-side end for mounting the optical element 5) than half of the level in the lengthwise direction of the light path 2.

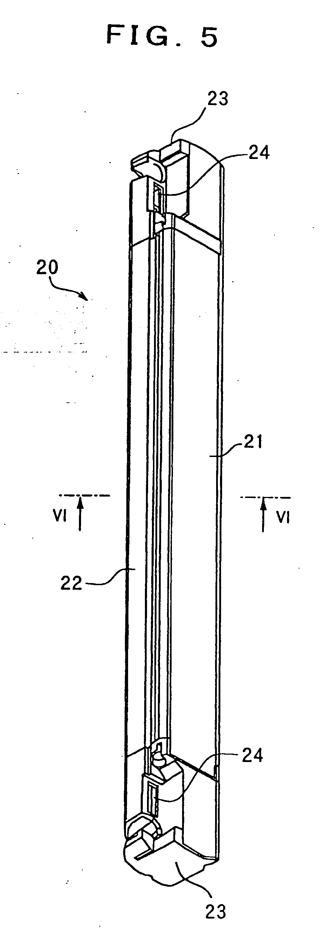

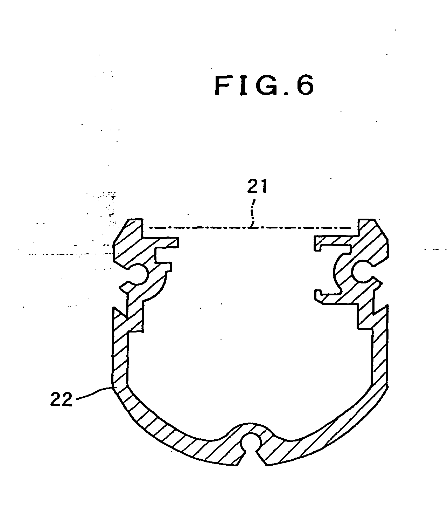

Figs. 5 through 8 show a multi-beam photoelectric sensor having the element holders 1 based on the above-explained theory. Fig. 5 shows an outer appearance of the multi-beam photoelectric sensor 20 in which the element holders according to the embodiment shown in Fig. 1 are used in form of discrete elements or equivalent portions of an integral structure. The multi-beam photoelectric sensor 20 comprises a light emitter unit and a light detector unit that are identical in outer appearance.

The multi-beam photoelectric sensor 20 has an elongated, straight, rod-like shape, and contains light emitting elements or light detecting elements aligned from one lengthwise end to the other in equal intervals. The multi-beam photoelectric sensor 20 has a light-emitting surface or light receiving surface 21 covered by a lens cover. Beams of light are emitted toward the light detector or enter into the light detector through the lens cover 21.

The outer shell of the multi-beam sensor 20 is composed of a main body 22 made by extrusion of aluminum, and terminal members 23 that are molded plastic products connected to opposite lengthwise ends of the main body 22. Each terminal member 23 has a connector opening 24.

The connector opening 24 opens toward the direction parallel to the optical axes and allows connection of an external connector, not shown, when inserted and pushed in parallel to the optical axes. The external connector connects the multi-beam photoelectric sensor to a controller, not shown, or an additional multi-beam photoelectric sensor.

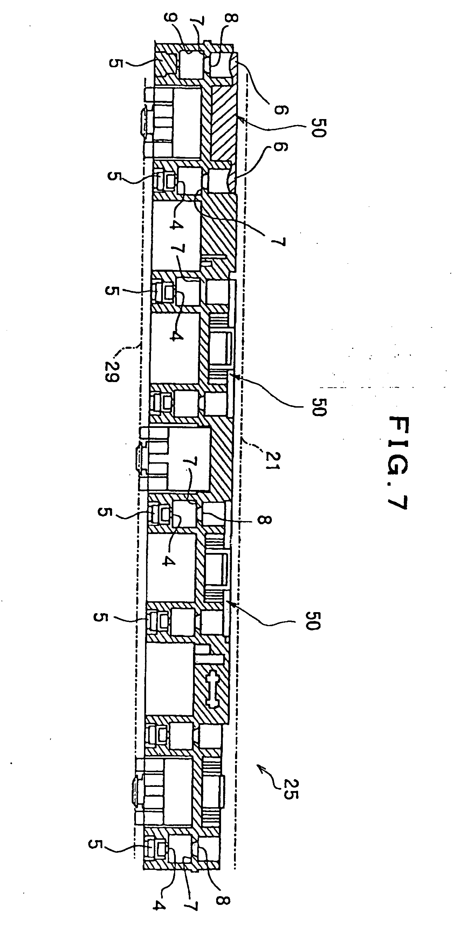

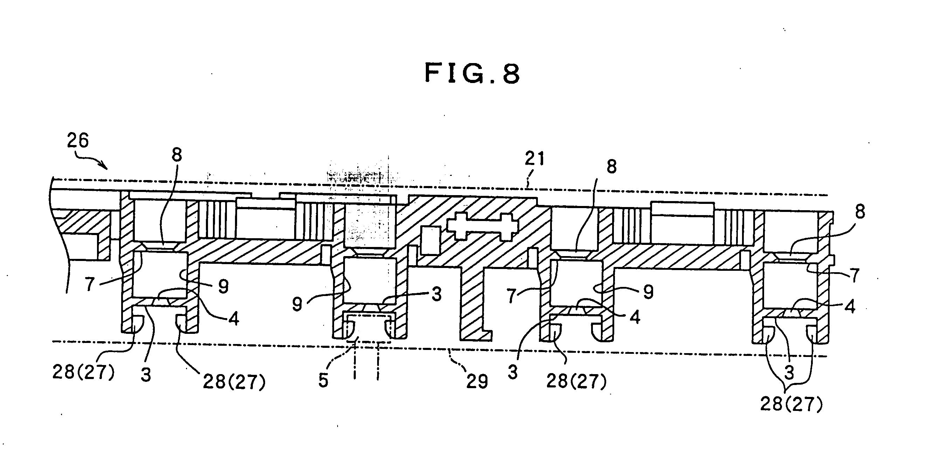

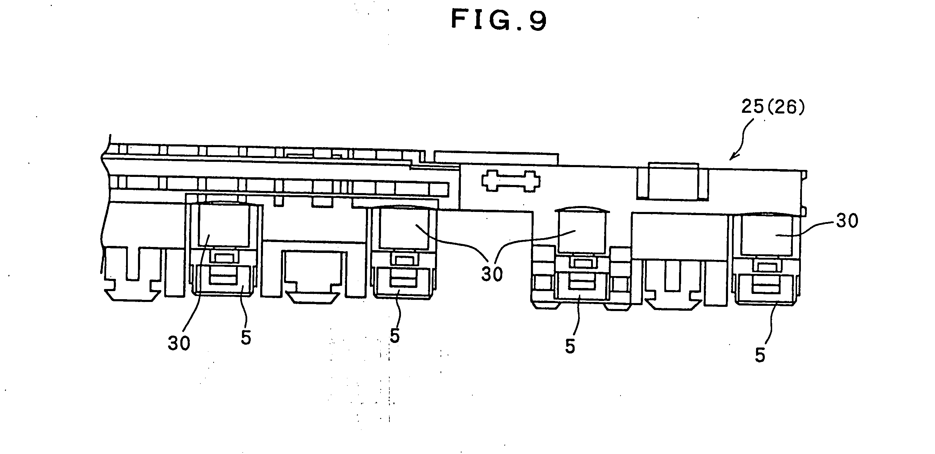

Fig. 7 shows the entire aspect of a holder unit 25 contained in the light emitter unit of the multi-beam photoelectric sensor 20. Fig. 8 is a cross-sectional, partial view of the holder unit 26 in the light emitter unit. Fig. 9 is a side elevation of the part of the holder unit 26 shown in Fig. 8. The emitter holder unit 25 (Fig. 7) for the light emitter unit and the detector holder unit 26 (Fig. 8) for the light detector unit are molded plastic products including element holder portions equivalent to the element holders 1 already explained above. Since these element holder portions are equivalent to the element holders 1, reference numerals used in the foregoing explanation of the element holder 1 are affixed to the components of the element holder portions, and explanation of these portions is omitted here.

Each element holder portion in the emitter holder unit 25 or the detector holder unit 26 has element-receiving portions 27 as components of equally spaced element holder portions, and they can receive corresponding optical elements 5 therein. Each element-receiving portion 27 has a hook 28 to hold the optical element 5 in position by hooking engagement. The optical element 5 to be held in each element-receiving portion 27 of the emitter holder unit 25 is typically a light emitting diode. The optical element 5 to be held in each element-receiving portion 27 of the detector holder unit 26 is typically a photodiode.

Lens units 50 are affixed on front surfaces of the holder units 25, 26. Each lens unit 50 is a molded plastic product having two lenses 6 spaced equally to the adjacent two element holder portions. Further, the lens cover 21, already explained, is assembled to cover the lens units 50. The front surfaces of the holder units 25, 26 or other components herein mean the surfaces opposed to each other when assembled in position in a multi-beam photoelectric sensor. Similarly, rear surfaces or rear ends of the holder units 25, 26 or other components herein mean the surfaces or ends opposite from the front surfaces.

On the rear surfaces of the holder units 25, 26, elongated substrates 29 are positioned to extend in the lengthwise directions of the holder units 25, 26. The substrates 29 have power circuits, control circuits, light emitting circuits or light detecting circuits, communication circuits, and others, incorporated thereon.

In an example, the holder units 25, 26 can hold eight light emitting elements or light detecting elements 5. If more optical axes than eight are required, any desired number of additional units (not shown) substantially equal to the element holders 25, 26 can be connected to the multi-beam photoelectric sensor 20.

As best shown in Fig. 9, the holder unit 25 (or 26) has openings 30 in the sidewalls between the base walls 3 and the intermediate light-blocking walls 7 to expose the corresponding part of the light paths 2. As explained later in greater detail, each opening 30 results from the use of a die removable in the direction perpendicular to the optical axis of the light path 2 in the molding process. Therefore, the opening 30 preferably has a height substantially equal to half of the length of the light path 2 and a width substantially equal to the diameter of the light path 2. The use of the dies of the above-explained type make it possible to complete the light paths 2 each having the base wall 3, its small aperture 4, the intermediate light-blocking wall 7 and its through hole 8 together in one molding process when manufacturing the holder units 25, 26.

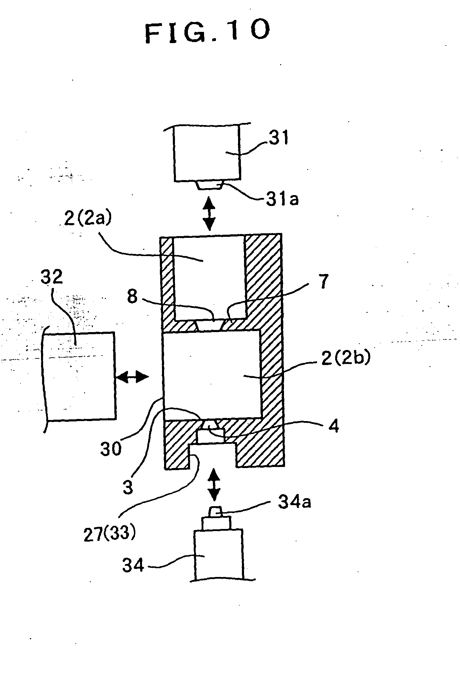

More specifically, as roughly shown in Fig. 10, lens-side (front) half 2a of the light path 2 and the through hole 8 in the intermediate light-blocking wall 7 are formed by a first die 31. The first die 31 has a shape made by cutting away a circumferential part from a circular column, and has a flat surface along the circumferential surface. Additionally, the first die 31 has a projection 31a projecting from the center of one end surface of the first die 31 to form the through hole 8 in the intermediate light-blocking wall 7.

The element-side (rear) half 2b of the light path 2 is formed by using a second die 32. The second die 32 is a member having a cross section combining a rectangular half to position nearer to the opening 30 and a semicircular half to position more remote from the opening 30.

The cavity 33 for accommodating the element 5 and the small aperture 4 in the base wall 3 is formed by using a third die 34 having a projection 34a that projects from the center of one end surface of the third die 34 to form the small aperture 4 in the base wall 3.

The first and third dies 31, 34 for forming the front and rear halves 2a, 2b of the light path 2 can be removed by movements in directions parallel to the optical axis of the light path 2. The second die 32, however, is removable through the opening 30 by movement in a direction across the optical axis of the light path 2. Thus, by setting the first to third dies 31, 32, 34 together in combination, it is possible to manufacture the holder unit 25 (or 26) having the element-receiving cavities 33, small apertures 4, rear light path halves 2b (nearer to the element-receiving cavities 33), intermediate light-blocking walls 7 having through holes 8, front light path halves 2a (nearer to the lens-side ends) simultaneously in one molding process.

The projection 31a projects from one end surface of the first die 31 to form the through hole 8 in the intermediate light-blocking wall 7 as already explained. The projection 31a is preferably shaped to reduce its diameter toward its distal end as illustrated such that the die 31 can be removed easily. In this case, the through hole 8 in the intermediate light-blocking wall 7 is shaped to become wider toward the lens-fitting end (front end).

Similarly, the projection 34a projects from the center of one end surface of the third die 34 as already explained. Here again, the projection 34a is preferably shaped to reduce its diameter toward its distal end as illustrated such that the die 34 can be removed easily. In this case, the small aperture 4 in the base wall 3 is shaped to become wider toward the element-fitting end (rear end).

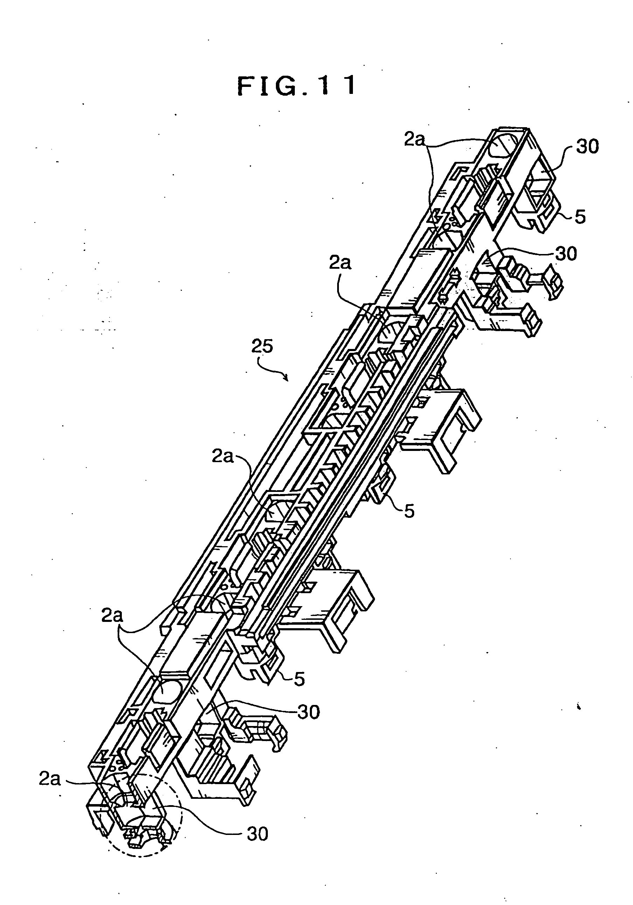

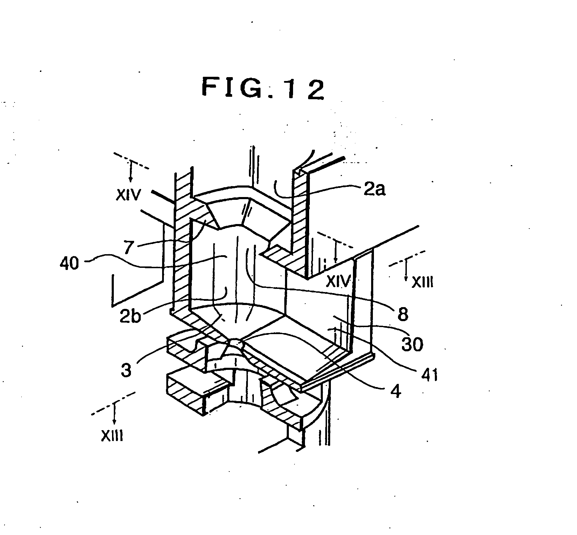

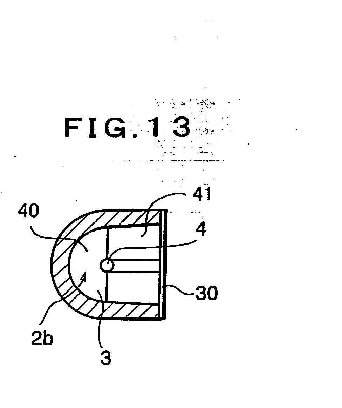

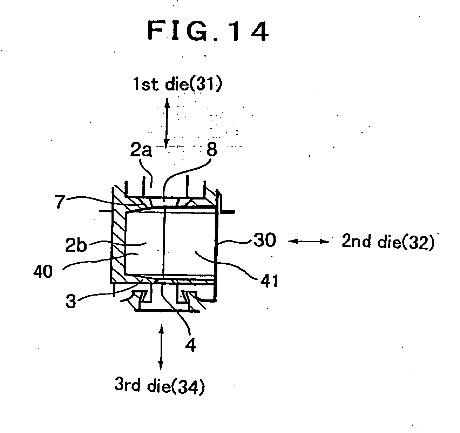

Figs. 11 through 15 show details of the intermediate light-blocking walls 7 and the light paths 2 that are formed by the first to third dies 31, 32 and 34. Fig. 11 is a perspective view of the holder unit 25 for the light emitter unit. A part of the holder unit 25 is cut off in Fig. 11 for looking at the interior structure. Fig. 12 is an enlarged perspective view of a portion shown in a dashed line circle in Fig. 11. Fig. 13 is a cross-sectional view taken along the line XIII-XIII of Fig. 12, and Fig. 14 is a cross-sectional view taken along the line XIV-XIV of Fig. 12.

As apparent from Figs. 12 through 14, each rear light path half 2b adjacent to the opening 30 has a shape combining an open-side portion 41 having a rectangular cross section and a closed-side portion 40 having a semicircular cross section, which is formed by the second die 32 having the corresponding shape as already explained. The opening 30 is formed by the rectangular half of the second die 32 and permits removal of the second die 32 through it. For facilitating the removal, it is preferable that second die 32 gradually reduces its width toward the semicircular end thereof.

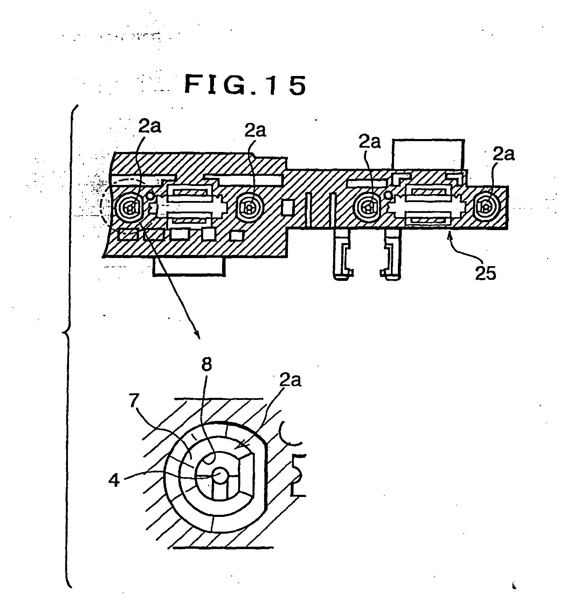

The second die 32 cooperates with the first die 31 to form the intermediate light-blocking wall 7. Those skilled in the art will easily understand from Fig. 15 that the first die 31 has a cross section corresponding to that of the rear light path half 2a (nearer to the lens-side end), which is basically circular but a part of the circle is cut off along a straight line. Thus, the rear light path half 2a is formed by the first die 31 to have the corresponding cross-sectional shape. Similarly, the projection 31a of the first die 31 also has a cross section that is basically circular but a part of the circle is cut off along a straight line. Thus, the through hole 8 in the intermediate light-blocking wall 7 is formed to have the corresponding cross section simultaneously with the intermediate light-blocking wall 7.

This application is based upon and claims the benefit of priority from the prior Japanese Patent Application No. 2002-329473, filed on November 13, 2002, and Japanese Patent Application No. 2003-282554, filed on July 30, 2003, the entire contents of these applications are incorporated herein by reference.

## Claims

1. A transmission type photoelectric sensor comprising:

    an optical element (5);
    a plastic element holder having a base wall (3) which has an aperture (4) and detachably contacts said optical element; and
    a lens (6) positioned adjacent to the element holder opposite from the base wall,

    wherein the element holder includes:

    a light path extending from the aperture of the base wall (3) to said lens; and
    an intermediate light-blocking wall (7) extending in a substantially equally spaced level from the base wall and the lens to limit the spread angle of light, and

    wherein the element holder is a single-piece molded product including the intermediate light-blocking wall (7).

2. The transmission type photoelectric sensor according to claim 1, wherein a wall defining the light path has a dark color.

3. The transmission type photoelectric sensor according any of the preceding claims, wherein the element holder includes a sidewall defining the light path has an opening from the base wall to the intermediate light-blocking wall to expose a corresponding part of the light path externally through the opening.

4. The transmission type photoelectric sensor according to any of the preceding claims, wherein the aperture (4) in the base wall (3) increases in diameter toward the optical element (5), and the intermediate light-blocking wall (7) includes a through hole that increases in diameter toward the lens (6).

**5.** The transmission type photoelectric sensor according to any of the preceding claims, wherein the transmission type photoelectric sensor is a multi-beam photoelectric sensor having a plurality of optical axes.

**6.** The transmission type photoelectric sensor according to any of the preceding claims, wherein the aperture (4) in the base wall (3) increases in diameter toward the optical element, and the intermediate light-blocking wall includes a through hole that increases in diameter toward the lens.

**7.** The transmission type photoelectric sensor according to any of the preceding claims, wherein the transmission type photoelectric sensor is a multi-beam photoelectric sensor having a plurality of optical axes.

**8.** A transmission type photoelectric sensor comprising:

   an optical element (5) for emitting or detecting light through a lens (6);
   a holding portion for holding the optical element;
   an aperture formed in the holding portion in optical alignment with the optical element;
   a sidewall defining a light path from the aperture to the lens;
   a light-blocking wall (7) extending from the sidewall;
   a through hole formed in the light-blocking wall to define a part of the light path; and
   an opening formed in the sidewall defining the part of the light path from the aperture to the light-blocking wall to expose the adjacent part of the light path externally through the opening.

**9.** The transmission type photoelectric sensor according to claim 8, wherein the aperture in the base wall increases in diameter toward the optical element (5), and the through hole in the light-blocking wall (7) increases in diameter toward the lens.

**10.** The transmission type photoelectric sensor according to any of claims 8 to 9, wherein the transmission type photoelectric sensor is a multi-beam photoelectric sensor having a plurality of optical axes.

**11.** A plastic element holder unit to be assembled in a transmission type photoelectric sensor for holding a plurality of optical elements (5) in equal intervals and permitting the optical elements to emit or receive light through lenses, comprising:

   a plurality of element holder portions for holding the individual optical elements therein, each said element holder portion including:

      a base wall (3) for detachably receiving each said optical element (5);
      an aperture (4) formed in a position of the base wall in optical alignment with the optical element;
      a sidewall defining a light path extending from the base wall to the lens (6);
      an intermediate light-blocking wall (7) which is integral with the sidewall and extends across the light path from the aperture to the lens to limit the spread angle of light; and
      an opening formed in the sidewall defining the part of the light path from the base wall to the intermediate light-blocking wall,

   wherein the element holder is a single-piece product.

**12.** The element holder unit according to claim 11, wherein the sidewall has a dark color.

**13.** The element holder unit according to any of claims 11 to 12wherein the sidewall has an opening from the base wall to the intermediate light-blocking wall to expose the corresponding part of the light path externally through the opening.

**14.** The element holder unit according to any of claims 11 to 13, wherein the aperture in the base wall increases in diameter toward the optical element (5), and the through hole in the intermediate light-blocking wall increases in diameter toward the lens (6).

**15.** The element holder unit according to any of claims 11 to 14, wherein the transmission type photoelectric sensor is a multi-beam photoelectric sensor having a plurality of optical axes.

**16.** A method of manufacturing a plastic element holder to be assembled in a transmission type photoelectric sensor for detachably holding an optical element (5), which element holder includes a light path extending from an aperture (4) formed in the base wall (3) in optical alignment with the optical element to the lens; and an intermediate light-blocking wall (7) extending across the light path in a level substantially equally spaced from the base wall and the lens and having a through hole to limit the spread angle of light, comprising the steps of: simultaneously setting a first die for making a lens-side half of the light path from the lens to the intermediate light-blocking wall and movable in parallel to the optical axis and a second die for a element-side half of the light path from the base wall to the intermediate light-blocking wall and movable across the optical axis; and injecting a material into a mold to make the lens-side half of the light path, the intermediate light-blocking wall (7) and the element-side half of the light path.

17. The method according to claim 16, wherein the method includes providing the first die with a first projection on one surface thereof to make the through hole in the intermediate light-blocking wall (7).

18. The method according to any of claims 16 to 17, wherein the method includes simultaneously setting a third die in position with the first and second dies to make an element receiving portion for holding the optical element (5), and then performing said step of injecting a material into a mold to form the lens-side half of the light path, the intermediate light-blocking wall, the element-side half of the light path and the element receiving portion simultaneously.

19. The method according to any of claims 16 to 18,wherein the method includes providing the third die with a second projection on one surface thereof to make the aperture in the base wall.

# FIG.1

# FIG. 2

# FIG. 3

P3(−T, H)

P6(x, y)

①

$P7\left(\dfrac{(T-a)}{2}, 0\right)$

(−T, 0)

# FIG. 4

P5(0, H)

P6(x, y)

②

$P4\left(-\dfrac{(T+a)}{2}, 0\right)$          (0, 0)

# FIG. 5

# FIG.6

FIG. 7

EP 1 420 271 A2

# FIG.8

EP 1 420 271 A2

# FIG.9

25(26)

30

30

30

5

5

5

5

17

# FIG.10

# FIG. 11

# FIG.12

# FIG.13

# F.I.G. 1 4

1st die(31)

2a    8

7

2b       30    2nd die(32)

40

3         41

4

3rd die(34)

# FIG.15